# EUROPEAN PATENT APPLICATION

(11) **EP 1 387 262 A1**
(43) Date of publication of application: **04.02.2004**
(21) Application number: 02405399.3
(22) Date of filing: 17.05.2002
(51) Int. Cl.: G06F 9/44

(54) **Method to generate synchronization contracts for software components and web services**

(71) Applicant: ABB RESEARCH LTD., 8050 Zürich (CH)
(72) Inventor: Preiss, Otto, 5079 Zeihen (CH); Shah, Anuj, 5404 Baden-Dättwil (CH)
(74) Representative: ABB Patent Attorneys

(57) **Abstract**

A method for automatically generating synchronization contracts for software components and Web services is provided. The method comprises the steps of: using UML diagrams to model permissible interaction scenarios; representing the relevant information from the UML models in XMI; generating path expressions wherein the interaction scenario in XMI is examined by parsing XMI for the static classifier type information and its defined messages; including these path expressions in a component or Web service description language; and using this enhanced component or Web service description at design time for verifying contract adherence and/or at run time for protecting the component or Web service from unwanted client behavior.

## Description

### TECHNICAL FIELD

The present invention is concerned with the synchronization of software components and/or Web services, in order to attain the correct integration of the functionality of various components that may originate from different sources. For example, a website may offer its services to the clients over the Internet, through a set of Web services. In this distributed setup, the sequence of interaction between the client (using a distributed software application) and the service provider (offering the application via the internet) has to be synchronized in order to achieve the correct behavior, the formal specification of the correct behavior being referred to as a contract. Particularly, the present invention provides a method for automatically generating synchronization contracts for software components and Web services.

### BACKGROUND ART

Software systems, distributed or not, are increasingly being built by composing components. A service refers to the provided functionality of such a component. The emerging field of Web services goes one step further. Rather than composing components, it promotes a composition of services in order to attain the intended application purpose, i.e., it promotes the integration of functionality provided by various Web sites. A Web service is therefore a Web page with a programmatic interface (Application Program Interface, API). An application based on a Web service is therefore a distributed application where the internet serves as the transparent distribution media.

Component composition and Web service composition have in common that the usage pattern of a certain component or Web service needs to be described in detail so that the user (client in the sequel) of it knows exactly how to interface or compose it. This includes syntactical as well as behavioral descriptions. These descriptions are referred to as contracts. Usually, many interactions between client and service are required to obtain a certain behavior, i.e., a correct functionality has to be established. Thus, one important aspect of the usage pattern is the definition of the preferred or even allowed interaction sequences with the service provider. This is called synchronization (derived from synchronization of method calls). In software engineering, services are described through the concepts of interfaces that contain methods, thus a component of a Web service may have a collection of interfaces, and each interface may have a collection of methods in turn. A simple example may serve to illustrate the underlying concepts as well as the "behavioral" problem. A bank account transfer component (or Web service) has just one interface, which in turn has three methods:

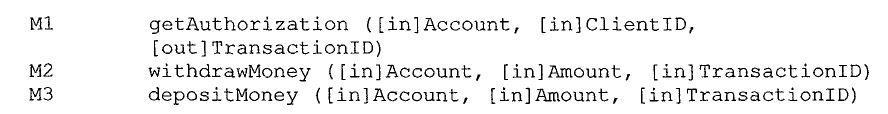

In order to transfer money from one to another account, the permissible sequence for a single transaction is M1 -> M2 -> M3 and there is no other permissible sequence to use the component. Hence, client software shall not try to ignore this sequence and run a different one. On the other hand, the software component - in the example: the bank account transfer component - shall not have to check all other eventualities for a possible misuse. This is achieved by a so-called synchronization guard.

In trying to apply these requirements and concepts to the Web, one is confronted with a further problem. Currently, the standard Web specific language is HTML (Hyper Text Markup Language) which is a stateless protocol and which can only be used for the presentation of static documents without the possibility of tracking the history of the transactions. In order to provide interactivity, Web services are usually provided by creating scripts in languages such as Perl where Web programmers code the storing of state needed for interactive services in various ad-hoc techniques within such scripts. For example, the interactivity can be provided by forms which have to be filled in by the client. In this case, a client's failure to correctly use the Web service can be described as a user's failure to fill in required form fields. Web programmers must therefore guard against the user's failure to do so when gathering several pieces of information from the user. Presently, programmers would have to explicitly code such checks and generate documents giving feedback to erroneous responses, which is a tedious and repetitive task.

In order to provide Web service synchronization for dealing with behavioral aspects, tools are needed which are sufficiently powerful for the development of reusable abstractions. The commonly used languages for building Web services (e.g., Tcl, Perl, and Awk) lack the facility to provide for these abstractions. On the other hand, there are general purpose languages as, e.g., Eiffel which provides pre-, postcondition and invariant formalisms to specify the behavior of individual method executions. Other approaches try to capture the fundamental issues of synchronization aspects. In particular, the original path expression formalism is a promising (because formal and yet simple) approach to capture permissible sequences of interactions with a service provider. However, this approach uses syntactical as well semantical elements and thus has to be generated by the programmer/designer manually - as is the case with any specification that goes beyond syntactical elements.

There is thus a need for an approach to generating synchronization contracts without having to build the specifications and contracts manually.

### SUMMARY OF THE INVENTION

It is thus an object of the present invention to provide a method for automatically generating synchronization contracts not only for software components but also for Web services.

This is achieved by a method with the features as described in claim 1. The present invention discloses a method that extracts relevant information from UML (Unified Modeling Language) sequence diagrams, which are represented in XMI (XML Metadata Interchange), and turns it into an algebraic representation based on path expressions, which is then included into a component or Web service description language such as IDL (Interface Definition Language) or WSDL (Web Service Description Language). The latter can then be used at client design and/or runtime. At client design time, a CASE (Computer Aided Software Engineering) tool could protect the client programmer from producing unwanted interaction sequences by verifying contract adherence; at runtime, a guard can protect the Web service or software component and relieve the component programmer from handling unwanted client behaviour. Simple code examples will be given in the detailed description below.

According to the present invention the Method for automatically generating synchronization contracts for software components and Web services comprises the following steps of:
- using UML diagrams to model permissible interaction scenarios,
- representing the relevant information from the UML models in XMI,
- generating path expressions wherein the interaction scenario in XMI is examined by parsing XMI for the static classifier type information and its defined messages,
- including these path expressions in a component or Web service description language and
- using this enhanced component or Web service description at client design time for verifying contract adherence and/or at run time as information for protecting the component or Web service from unwanted client behavior.

Further advantages and objects of the present invention are described in the dependent claims.

### BRIEF DESCRIPTION OF THE DRAWING

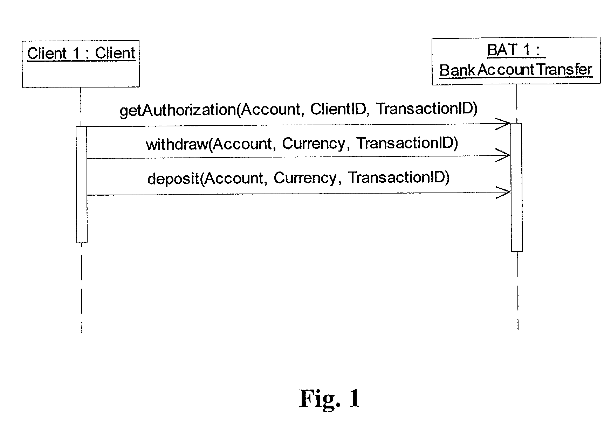

In the following the present invention will be described in more detail in connection with the enclosed drawing, Fig. 1, which shows a UML sequence diagram which models the behaviour of a bank account transfer component.

### DESCRIPTION OF THE PREFERRED EMBODIMENTS

In the following, the concept of the synchronization of sequences will be explained with reference to the bank account transfer example that has already been mentioned. In a first step, the method according to the present invention uses a UML sequence diagram or a UML object collaboration diagram to model permissible interaction scenarios. UML is an OMG standard and can be described as a graphical language for specifying, visualizing, constructing and documenting the artifacts of software systems. The sequence diagram shown in Fig. 1 models the behavior of the bank account transfer component. It shows the only permissible sequence of operations or method calls for transferring money from one account to another. All other sequences of method calls, on this component, are not modeled here and would thus be considered as a misuse of the component. This sequence diagram hence graphically models the synchronization contract for the bank account interface.

In a second step, the method according to the present invention represents the relevant information from a UML sequence diagram in XMI. XMI is an XML (Extensible Markup Language) based OMG (Object Management Group) standard to textually represent and interchange meta-model information. An XML DTD (Document Type Definition) for UML has been defined therein to represent UML diagrams in XMI. A UML collaboration like the sequence diagram is represented in XMI by first creating the XMI representation of the static model which holds the definitions of various data-types, interfaces and classes used in the behavioral model of the software system. Then each diagram is represented as an XMI entity which owns or contains the Role entities or instances of the classes modeled in it. The relationships between these entities are established by associations also owned by the diagram entity. The behavioral characteristics of the modeled entities and their interactions are then described by message representations containing tagged entities which sequence these messages by defining preceding and following messages. The actions to be taken on message invocation are also listed to complete the XMI representation of the diagram. Each diagram represents one possible behavior pattern of a set of entities and the same or modified set of entities could be represented in multiple diagrams to exhibit other behavioral patterns or interactions amongst them. All these models or contract specifications could be represented in a single or in multiple XMI files. In the bank account transfer example, the static concepts of the Client and the Bank Account Transfer components (or Web-services), together with the interface definitions holding the definitions of the operations available in the interfaces and the data types used by the operations are first created. To represent the behavioral model the Roles for each of the Client and the Bank Account Transfer are then created. The XMI representation - generated with the help of the Unisys XML tools for Rose - of the Classifier Role for the Bank Account Transfer is given in the following code example:

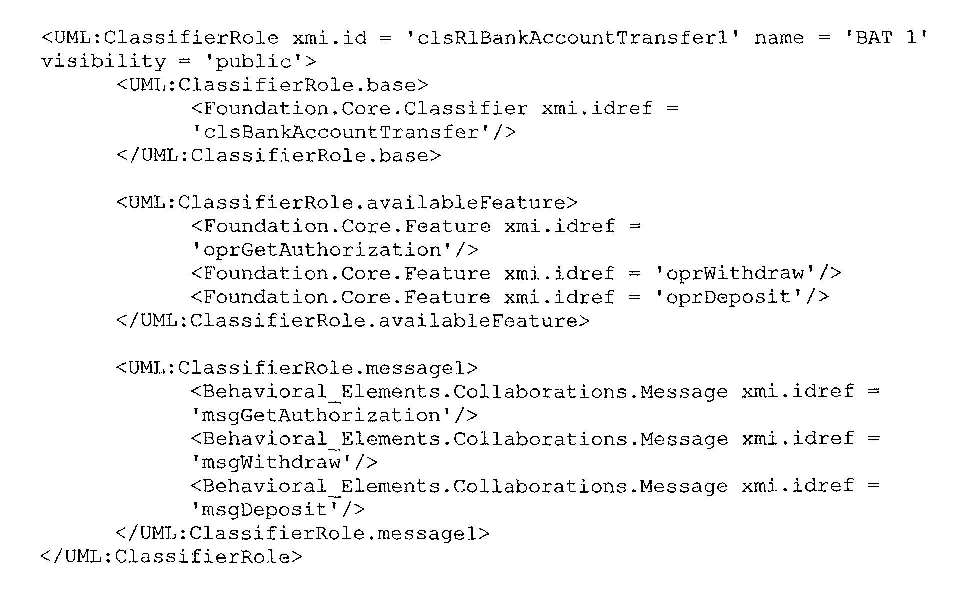

The XMI representation for the Role lists the unique id of the base classifier to which the role belongs with the available set of features on this role and the utilized set of features.

The Association between these Roles is also documented in XMI. Then the interaction between these Roles is documented. All the messages exchanged between the participants are documented to necessary detail in this part of the XMI document. An extract of the document for the withdraw message for the Bank Account Transfer Sequence diagram is given in the code example below:

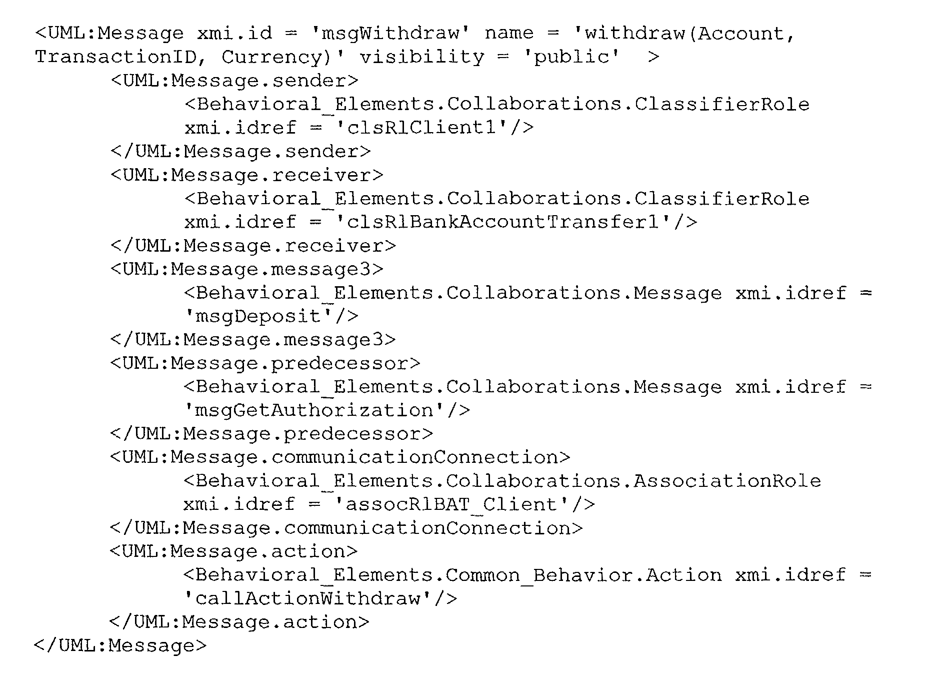

The XMI representation of the message includes details of the sender (i.e. the Client), the receiver (i.e. the Bank Account Transfer Web-service), the following message specified by the element message3 (i.e. deposit) and the predecessor message specified by the element predecessor (i.e. getAuthorization), and also the action to be taken on the invocation of this message. Thus the representation of the interaction completely specifies the sequence of messages executed in the behavioral contract. The actions are documented with the operations to be called on invocation of each action. These actions are documented as shown in the following code example:

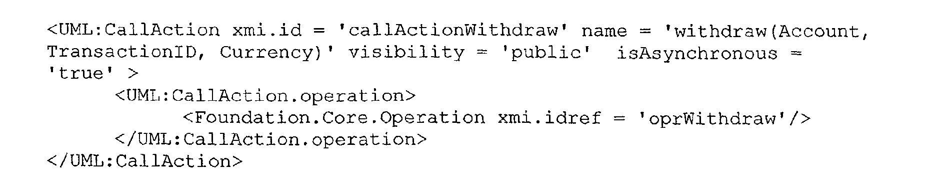

Thus the XMI representation of the UML diagram documents all the information about the behavioral contract specified by the document. This information can then be easily accessed by utilizing the XML Document Object Model and a standard XML parser.

In a third step, a so-called path expression is generated from the relevant XMI information. This construct - which is based on the original ideas of Campell and Habermann in *The Specification of Process Synchronization by Path Expressions* (presented at Int. Symposium on Operating Systems, 1973) - describes how an instance of that type may be used by one or several client components. While the original authors proposed the method for synchronizing between procedure executions by different processes (with its main application to operating systems), the method according to the present invention utilizes it not only in the integrity protection of a server component with respect to multiple client components but also in the unambiguous description of the permissible sequence of method invocations to obtain a desired functionality that is relevant for one client only. In the following, only those parts of the formalism are presented that are needed to comprehend the running example.

For the present purpose, a path expression expresses the temporal relationships between the methods identified for a component server. It specifies the sequence (with notation ";"), single selections among alternatives (","), and parallelism of methods ("{}"). Hence,
A;B;C
specifies that these methods must be in sequence starting with A.
A,B specifies that only A or B may be called. And,
{A}
defines that a number of client components may invoke A in parallel. Combinations of these basic constructs are of course possible.

With respect to the running example, one obtains the path expression for a server component by examining the interaction scenario between a client and server represented in XMI. Concretely, one needs to consider the type information for the BankAccountTransfer server component by parsing the XMI for the static classifier type information and its defined messages in the context of one specific client component (or sender as it is called in the XMI <UML:Message. sender> tag). Thus the expression

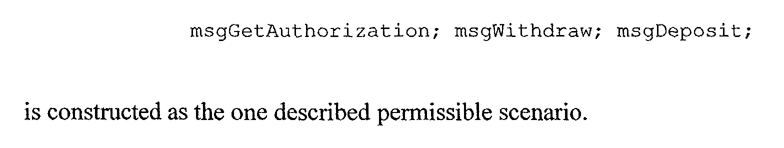

In a fourth step, the path expressions are included in a service description language as, e.g., the Web Service Description Language (WSDL). It is an XML format for the abstract description of services (or "abstract endpoints" as they are called in the standard) in the form of operations and messages. The abstract descriptions are then bound to a concrete network protocol and message format (e.g. SOAP on http). For the WSDL a new type related construct enclosed in the <path> </path> tags is proposed, which shall hold the path expression related information. In essence, it shall enhance the port definitions of a service. The code below shows the relevant part of a WSDL-based description for the running example:

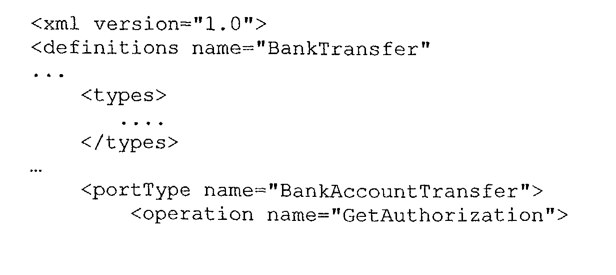

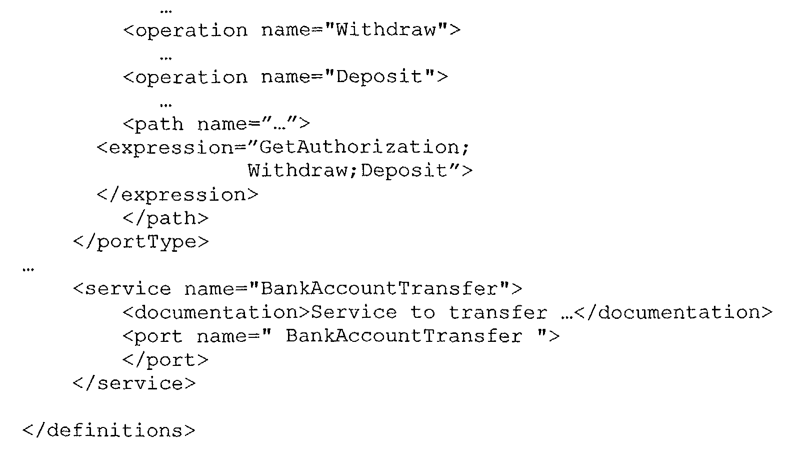

Generally, the description consists of three major parts. The type descriptions of the exchanged data (enclosed in the <types> tag block), the port type definitions (enclosed in the <portType> tag block), and the service definition (enclosed in the <service> tag block). A service can thus have a number of service ports and a service port a number of operations.

In a last step, the enhanced service description can be used in two alternative ways. Firstly, it can be used at client design time in tools like, e.g., Microsoft Visual Studio or IBM Visual Age (a) to create code skeletons by predetermining the right order of possible sequences, (b) to provide code completion facilities which automatically propose the next Web service method if the variable that has already been used in the preceding Web service method is typed in again, and (c) to check the finished code for formal correctness at compile time. Secondly, the enhanced service description can be used to realize runtime guards for checking the correct order of permissible sequences on the server side at run time. The latter can be achieved by using COM+ policy objects, proxy and stubs extensions or separate facade objects preceding the Web services.

Of course, other languages suitable for Web services as, e.g., the Service Contract Language (SCL) can be envisaged. Suitable languages or software components are, e.g., CORBA-IDL or MS-IDL.

In short, the method according to the present invention provides a facility to generate synchronization contracts by using UML diagrams for permissible interaction scenarios, representing the relevant UML information in XMI, generating path expressions from the XMI interaction scenario, including these path expressions in a component or Web service description language and using this enhanced description for verifying contract adherence in client programming at design time and as information for a guard protecting a Web service or a software component at run time, respectively.

## Claims

1. Method for automatically generating synchronization contracts for software components and Web services
**characterized in that** the method comprises the following steps of:
- using UML diagrams to model permissible interaction scenarios,
- representing the relevant information from the UML models in XMI,
- generating path expressions wherein the interaction scenario in XMI is examined by parsing XMI for the static classifier type information and its defined messages,
- including these path expressions in a component or Web service description language and
- using this enhanced component or Web service description at client design time for verifying contract adherence and/or at run time as information for protecting the component or Web service from unwanted client behavior.

2. Method according to claim 1, **characterized in that** the Web service description language is WSDL or SCL.

3. Method according to claim 1, **characterized in that** the component description language is CORBA-IDL or MS-IDL.

4. Method according to one of the preceding claims, **characterized in that** the verification of contract adherence at client design time consists in creating code skeletons by predetermining the right order of possible sequences and/or providing code completion facilities and/or checking the finished code for formal correctness at compile time.

5. Method according to claim 1, 2 or 3, **characterized in that** the protection at run time consists in checking the correct order of permissible sequences by using the information for protection in COM+ policy objects, proxy and stubs extensions or separate facade objects preceding the Web services
